# EUROPEAN PATENT APPLICATION

(11) **EP 4 474 251 A1**
(43) Date of publication of application: **11.12.2024**
(21) Application number: 22930252.6
(22) Date of filing: 08.03.2022
(51) Int. Cl.: B62D 6/04, G01P 5/00

(54) **DATA TRANSMISSION METHOD, APPARATUS, AND SYSTEM**

(71) Applicant: Huawei Technologies Co., Ltd., Shenzhen, Guangdong 518129 (CN)
(72) Inventor: SONG, Sida, Shenzhen, Guangdong 518129 (CN); MA, Sha, Shenzhen, Guangdong 518129 (CN); ZHOU, Zheng, Shenzhen, Guangdong 518129 (CN); LV, Xiaoyu, Shenzhen, Guangdong 518129 (CN)
(74) Representative: Maiwald GmbH
(86) International application number: PCT/CN2022/079789
(87) International publication number: WO 2023/168606

(57) **Abstract**

This application discloses a data transmission method and system, and an apparatus, which may be applied to fields such as intelligent transportation, smart home, and intelligent manufacturing. The method includes: A first processing apparatus obtains sensing data from at least one first sensor, where the sensing data includes data obtained based on a sound signal. The first processing apparatus determines, based on the sensing data, information about an environment of a device on which the at least one first sensor is located, where the information about the environment includes wind field information. According to the method, a vehicle can perceive strong wind weather, to satisfy, without affecting appearance and safety of the vehicle, a requirement for information required by the vehicle for planning and controlling traveling of the vehicle in a strong wind day, and improve safety performance of the vehicle.

## Description

### TECHNICAL FIELD

This application relates to the field of intelligent vehicles, and in particular, to a data transmission method and system, and an apparatus.

### BACKGROUND

In daily life, impact of strong wind weather on vehicle safety cannot be ignored. For example, if a vehicle encounters a crosswind in a traveling process, the vehicle deviates from a traveling route, causing casualties.

However, a current driving system lacks perception of strong wind weather, resulting in low driving safety.

### SUMMARY

This application provides a data transmission method and system, and an apparatus, so that a vehicle can perceive strong wind weather, to satisfy a requirement for information required by the vehicle for planning and controlling traveling of the vehicle in a strong wind day, and improve safety performance of the vehicle.

According to a first aspect, a data transmission method is provided. The method may be applied to any terminal device (for example, including but not limited to a vehicle) having a perception capability. The method includes: A first processing apparatus obtains sensing data from at least one first sensor, where the sensing data includes data obtained based on a sound signal. The first processing apparatus determines, based on the sensing data, information about an environment of a device on which the at least one first sensor is located, where the information about the environment includes wind field information.

It should be understood that the wind field information described in this specification is information related to a wind in the environment in which the device (for example, the vehicle) is located. The wind field information may be any information describing an attribute (or a feature) of the wind in the environment in which the device is located. For example, the wind field information includes but is not limited to one or more of the following: a wind speed, a wind direction, a wind intensity, or the like.

In the foregoing solution, the first processing apparatus obtains the sensing data from the at least one first sensor, and determines, based on the sensing data, the wind field information of the environment of the device on which the at least one first sensor is located, so that the vehicle can perceive strong wind weather, to satisfy, without affecting appearance and safety of the vehicle, a requirement for information required by the vehicle for planning and controlling traveling of the vehicle in a strong wind day, and improve safety performance of the vehicle.

In a possible design, the wind field information may be one or more of the following: a wind speed, a wind direction, or a wind intensity in a preset direction. The preset direction is not limited in this application. For example, the preset direction is perpendicular to a traveling direction of the device. In other words, the wind field information may be specifically crosswind information.

According to this implementation, the vehicle can perceive wind field information in the preset direction (for example, a crosswind), and wind perception accuracy of the vehicle can be improved.

In a possible design, the data obtained based on the sound signal includes a wind noise intensity and/or a wind noise direction. Correspondingly, the first processing apparatus obtains the wind field information based on the wind noise intensity and/or the wind noise direction.

According to this implementation, the wind field information can be determined based on wind noise information, and reliability is high.

In a possible design, the at least one first sensor includes at least two microphones distributed at different positions on the device, and the sound signal is obtained through the microphone. In other words, the first processor may determine the wind field information based on data collected by a plurality of microphones distributed at different positions. For example, the first processing apparatus may obtain a direction, an intensity, and the like of a crosswind around the vehicle based on a wind noise intensity difference between a left side and a right side of the vehicle.

According to this implementation, the wind field information can be determined based on wind noise signals collected by microphones at different positions. Design costs are low, implementation is easy, and appearance and safety of the vehicle are not affected.

In a possible design, the first processing apparatus is a fusion unit. The fusion unit may perform fusion processing on sensing data from sensors of different types with different functions and at different installation positions, to obtain a sensing result. The sensing result may explain a scene around the vehicle. For example, the fusion unit may be specifically a fusion unit in an ISO 23150 standard protocol.

In a possible design, the first processing apparatus is a domain controller of the at least one first sensor, for example, a domain controller of a microphone.

In a possible design, the first processing apparatus may further send the wind field information to a second processing apparatus, where the wind field information is for adjusting a dynamics model parameter of the device. For example, the first processing apparatus may send the wind field information to a planning and control module responsible for vehicle track planning and control in an automated driving system, so that the planning and control module adjusts a vehicle dynamics parameter such as a speed or an acceleration based on the wind field information, to control a vehicle track, and the vehicle travels more smoothly in strong wind weather.

In this way, traveling safety of the vehicle can be improved.

In a possible design, the first processing apparatus may further send the wind field information to at least one second sensor, where the wind field information is for adjusting a detection parameter of the at least one second sensor. For example, the first processing apparatus may send the wind field information to an ultrasonic sensor, to compensate for a detection result of the ultrasonic sensor, so as to counteract impact caused by air flow.

In this way, detection precision of the second sensor can be improved.

In a possible design, the first processing apparatus may further send the wind field information to a third processing apparatus or a human-machine interaction apparatus to control the human-machine interaction apparatus to display or play the wind field information. For example, the first processing apparatus may send (directly or by using a CDC) the wind field information to a central control screen, so that the central control screen can display an air flow change in a current environment in real time.

In this way, a user can learn the air flow change in the environment through the human-machine interaction apparatus, to assist the user in driving the vehicle safely, so that user experience can be improved.

According to a second aspect, a processing apparatus is provided, including a module/unit/means configured to perform the method according to the first aspect or any possible design of the first aspect. The module/unit/means may be implemented by using software, or may be implemented by using hardware, or may be implemented by hardware by executing corresponding software.

For example, the processing apparatus may include: an obtaining unit, configured to obtain sensing data from at least one first sensor, where the sensing data includes data obtained based on a sound signal; and a determining unit, configured to determine, based on the sensing data, information about an environment of a device on which the at least one first sensor is located, where the information about the environment includes wind field information.

According to a third aspect, a processing apparatus is provided, including at least one processor and an interface circuit. The interface circuit is configured to receive a signal from another apparatus different from the apparatus and transmit the signal to the processor, or send a signal from the processor to another apparatus different from the apparatus. The processor is configured to implement the method according to the first aspect or any possible design of the first aspect by using a logic circuit or executing code instructions.

According to a fourth aspect, a data transmission system is provided, including: at least one first sensor, configured to obtain sensing data, where the sensing data includes data obtained based on a sound signal; and a first processing apparatus, configured to obtain the sensing data from the at least one first sensor, and determine, based on the sensing data, information about an environment of a device on which the at least one first sensor is located, where the information about the environment includes wind field information.

According to a fifth aspect, a terminal device is provided, including the system according to the fourth aspect. Optionally, the terminal device may be a vehicle, a drone, a helicopter, an airplane, a ship, an intelligent transportation device, a smart home device, or the like.

According to a sixth aspect, a computer-readable storage medium is provided. The readable storage medium is configured to store instructions, and when the instructions are executed, the method according to the first aspect or any possible design of the first aspect is implemented.

According to a seventh aspect, a computer program product is provided. The computer program product stores instructions, and when the instructions are run on a computer, the computer is enabled to perform the method according to the first aspect or any possible design of the first aspect.

For technical effects of the second aspect to the seventh aspect, refer to technical effects that can be achieved by corresponding designs in the first aspect. Details are not described herein again.

### BRIEF DESCRIPTION OF DRAWINGS

FIG. 1 is a diagram of an application scenario according to an embodiment of this application;
FIG. 2 is a diagram of a driving system according to an embodiment of this application;
FIG. 3 is a flowchart of a data transmission method according to an embodiment of this application;
FIG. 4 is a diagram of several microphone installation positions according to an embodiment of this application;
FIG. 5A and FIG. 5B are diagrams of wind field information in a preset direction;
FIG. 6 is a diagram of a structure of a processing apparatus 600 according to an embodiment of this application; and
FIG. 7 is a diagram of a structure of another processing apparatus 700 according to an embodiment of this application.

### DESCRIPTION OF EMBODIMENTS

Technical solutions provided in embodiments of this application may be applied to any scenario in which perception of a wind is needed.

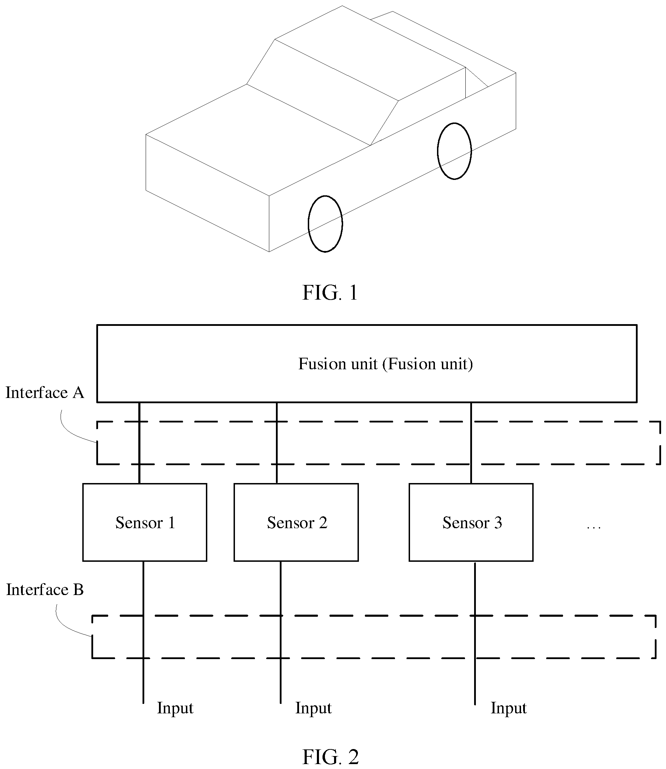

For example, FIG. 1 is a diagram of an application scenario according to an embodiment of this application. The scenario may be specifically an automated driving (Automated Driving, AD), assisted driving, or manual driving scenario. In this scenario, if there is a wind in an environment in which a vehicle is located, impact of the wind needs to be considered when the vehicle is controlled to travel. For example, when the vehicle travels through a bridge section, impact of a crosswind needs to be considered, a direction of the crosswind needs to be correctly determined, a steering wheel needs to be tightly held, an acceleration pedal needs to be released, and the steering wheel needs to be slightly adjusted toward the direction of the incoming wind to keep the vehicle on an original traveling route. For example, when the vehicle travels out of a tunnel, impact of a crosswind needs to be considered, a direction of the crosswind needs to be determined, the steering wheel needs to be tightly held, the acceleration pedal needs to be released, and the steering wheel needs to be slightly adjusted toward the direction of the incoming wind to keep the vehicle on an original traveling route. For example, when there is a strong transverse air flow or wind on one side of the vehicle, performance of lane centering assistance (LCC) is affected.

It should be noted that the scenario shown in FIG. 1 is merely an example. In addition to a vehicle, the technical solutions provided in embodiments of this application may be applied to any other terminal device having a perception capability. For example, the terminal device may be an intelligent device having a sound detection capability, and includes but is not limited to: a smart home device, for example, a television, a robot vacuum, a smart desk lamp, a sound system, an intelligent lighting system, an electrical appliance control system, home background music, a home theater system, an intercom system, or video surveillance; an intelligent transportation device, for example, a car, a ship, a drone, a train, a van, or a truck; or an intelligent manufacturing device, for example, a robot, an industrial device, intelligent logistics, or an intelligent factory. Alternatively, the terminal device may be a computer device having a sound detection capability, for example, a desktop computer, a personal computer, or a server. It should be further understood that the terminal device may alternatively be a portable electronic device having a sound detection capability, for example, a mobile phone, a tablet computer, a palmtop computer, a headset, a sounder, a wearable device (for example, a smartwatch), a vehicle-mounted device, a virtual reality device, or an augmented reality device.

For ease of description, in this specification, embodiments of this application are mainly described in detail by using a vehicle as an example.

FIG. 2 is a diagram of a driving system according to an embodiment of this application. The driving system may be deployed in the vehicle shown in FIG. 1.

The driving system may include a plurality of sensors of different types with different functions and at different installation positions (a sensor 1, a sensor 2, and a sensor 3 are shown in FIG. 2, and this is not limited thereto in practice). The sensors are configured to sense a scene around the vehicle to obtain sensing data. A type of the sensor includes but is not limited to a millimeter-wave radar, a lidar, a camera, an ultrasonic sensor, a sound sensor (for example, a microphone), or the like.

The driving system further includes one or more fusion units (Fusion units) (one fusion unit is used as an example in FIG. 2, and this is not limited thereto in practice). The sensor may transmit sensing data to the fusion unit by using a logical interface (for example, an interface A in FIG. 2) between the sensor and the fusion unit. The fusion unit may perform fusion processing on sensing data from the sensors of different types with different functions and at different installation positions, to obtain a sensing result. The sensing result may explain the scene around the vehicle. For example, the sensing result may include wind field information of an environment in which the vehicle is located. It should be understood that the wind field information herein is information related to a wind in the environment in which the vehicle is located. The wind field information may be any information describing an attribute (or a feature) of the wind in the environment in which the vehicle is located, for example, a wind speed, a wind direction, a wind intensity, or wind strength. This is not limited in this application. A type of the sensor includes but is not limited to a millimeter-wave radar, a lidar, a camera, an ultrasonic sensor, or the like.

In a possible design, the interface A may be described in a modular and semantic representation form, and provide information about an object level (Object Level) (for example, a potential moving object, a road object, or a static object), information about a feature level (Feature Level) and a detection level (Detection Level) that are based on sensor technology specific information, and more supportive information (Supportive Information) that is available.

Further, the architecture shown in FIG. 2 further includes an interface B, which is a logical interface for the sensor to receive data, for example, receive data from a module related to an automated driving function (an AD function module), a fusion unit, or another sensor. The fusion unit and the AD function module may be integrated into one chip, or may be separately integrated into different chips. This is not limited in embodiments of this application.

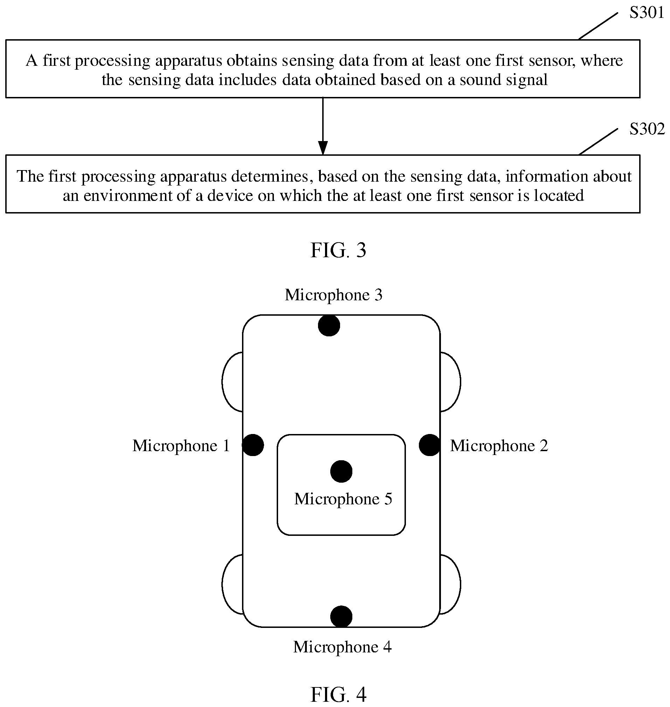

FIG. 3 is a flowchart of a data transmission method according to an embodiment of this application. An example in which the method is applied to the scenario shown in FIG. 1 is used. The method includes the following steps.

S301: A first processing apparatus obtains sensing data from at least one first sensor, where the sensing data includes data obtained based on a sound signal.

The data obtained based on the sound signal may be original data collected by a sensing element in the first sensor, for example, an analog signal formed after the sensing element senses the sound signal, or may be data obtained after the original data is processed, for example, a signal obtained after processing such as analog-to-digital conversion, filtering, or amplification is performed on the analog signal. This is not limited in this application.

The first sensor may be any sensor having a sound detection capability, for example, a microphone (or referred to as a mike) or a microphone array.

In a possible design, the at least one first sensor includes at least two microphones distributed at different positions on a device, and the sound signal is obtained through the microphone. As shown in FIG. 4, microphones may be disposed at positions such as a left side, a right side, a front side, a rear side, and a top of a vehicle. Only one microphone or a plurality of microphones may be installed at each position. This is not limited in this application. It may be understood that the several microphone installation positions shown in FIG. 4 are merely examples, and there are other implementations in practice. This is not limited in this application.

It should be noted that, in this specification, a scenario of sensing wind field information of an environment in which the vehicle is located is used as an example, and in this case, the at least one first sensor is disposed outside a compartment. In a scenario in which wind field information of the inside of the compartment needs to be sensed, the at least one first sensor may alternatively be disposed inside the compartment. In an actual application, positions and a quantity of microphones may be adjusted according to a scenario requirement.

In this embodiment of this application, when there are a plurality of first sensors, the first processing apparatus may obtain corresponding sensing data from each first sensor.

In a possible design, the data obtained based on the sound signal includes but is not limited to a wind noise intensity (Wind noise intensity) and/or a wind noise direction (Wind noise direction). Wind noise means a noise signal caused by a wind. Correspondingly, the wind noise intensity is an intensity of the noise signal caused by the wind, and the wind noise direction is a direction of the noise signal caused by the wind in the sound signal.

It may be understood that, in addition to the noise signal caused by the wind, the sound signal collected by the first sensor may include a noise signal caused by another factor, for example, a noise signal generated by a horn or a noise signal generated by friction between a wheel and the ground.

The first processing apparatus may be disposed on the device (for example, the vehicle) on which the at least one first sensor is located, or may be disposed on a cloud and communicatively connected to the device on which the at least one first sensor is located. This is not limited in this application.

S302: The first processing apparatus determines, based on the sensing data, information about an environment of the device on which the at least one first sensor is located.

In a possible design, the information about the environment includes wind field information.

The wind field information is information related to a wind in the environment in which the device (namely, the vehicle) on which the first sensor is located is located, and the wind field information may describe an attribute (or a feature) of the wind in the environment of the device on which the first sensor is located. For example, the wind field information includes one or more of the following: a speed of the wind (namely, a wind speed), a direction of the wind (namely, a wind direction), an intensity of the wind (namely, a wind intensity, or which may be wind strength) in the environment of the device on which the first sensor is located, or the like.

In a possible design, the wind field information includes one or more of the following: a wind speed, a wind direction, or a wind intensity in a preset direction. In other words, this embodiment of this application may focus on a wind speed, a wind direction, a wind intensity, or the like in only one specific direction. For example, in a driving scenario, when the vehicle is affected by a crosswind (or a side wind), a vehicle accident is easily induced. In this case, the preset direction may be perpendicular to a traveling direction of the device (namely, the vehicle) on which the first sensor is located (may be a direction perpendicular to the traveling direction in a horizontal plane). Certainly, this is merely an example. In an actual application, the preset direction may alternatively be another direction. This is not limited in this application.

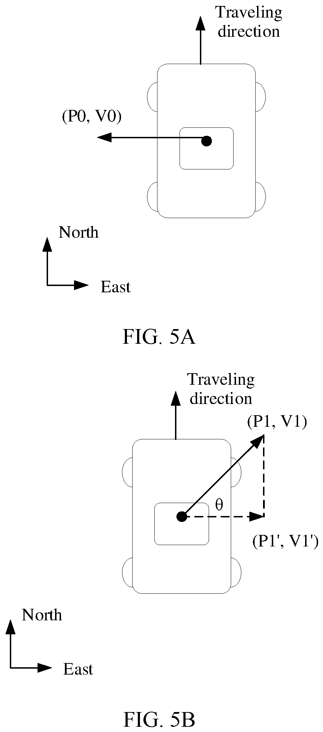

It may be understood that, when the direction of the wind in the environment in which the device is located is the preset direction, the wind field information obtained by the first processing apparatus by processing the sensing data is wind field information in the preset direction (for example, a wind speed and a wind intensity in the preset direction). For example, as shown in FIG. 5A, the traveling direction of the vehicle is a north-south direction, the preset direction is an east-west direction, and the wind field information obtained by the first processing apparatus by processing the sensing data is wind field information in the east-west direction, which includes: A wind intensity in the east-west direction is P0, and a wind speed is V0.

When the direction of the wind in the environment in which the device is located is not the preset direction, for example, is a first direction, and the first direction is different from the preset direction, the wind field information obtained by the first processing apparatus by processing the sensing data may be wind field information in the first direction. The first processing apparatus may decompose the wind field information in the first direction, to obtain a component, in the preset direction, of the wind field information in the first direction. The component is wind field information in the preset direction. For example, as shown in FIG. 5B, the traveling direction of the vehicle is a north-south direction, the preset direction is an east-west direction, and the wind field information obtained by the first processing apparatus by processing the sensing data includes: The wind direction is θ east by north, the wind intensity is P1, and the wind speed is V1. In this case, wind field information in the east-west direction includes: A wind intensity is P1'=P1×cosθ, and a wind speed is V1'=V1×cosθ.

It may be understood that, in the examples provided in FIG. 5A and FIG. 5B, a coordinate system on which the wind field information is based is a world coordinate system, namely, geographical east, west, north, and south. In an actual application, the first processing apparatus may further collect statistics on the wind field information based on another coordinate system, for example, an ego-vehicle coordinate system or a sensor coordinate system. This is not limited in this application.

In a possible design, the first processing apparatus may determine, based on a wind noise intensity difference between wind noise information collected by sensors at at least two different installation positions, information such as the wind direction, the wind speed, or the wind intensity in the environment in which the vehicle is located. For example, the first processing apparatus may obtain a direction and an intensity of a crosswind based on a wind noise intensity difference between a left side and a right side of the vehicle (specifically, a curve of a relationship between a left-right wind noise intensity difference and a crosswind intensity may be fitted according to a theoretical formula, or a model may be obtained through data collection and annotation and training according to a neural network method and is used for mapping between the wind noise intensity difference and the crosswind intensity). It may be understood that crosswind information is used as an example herein, and in practice, measurement of wind speeds, wind directions, and wind intensities in all directions around the vehicle may be extended to. This is not limited in this application.

In a possible design, in addition to obtaining the sensing data from the microphone, the first processing apparatus may obtain sensing data from another sensor. In addition to the wind field information, the information about the environment determined by the first processing apparatus may include other information.

In an example, crosswinds usually occur at some wind gaps or wide open areas. On a highway, there are usually lanes and isolation belts and no side winds. However, the vehicle is prone to a crosswind at a moment at which the vehicle exits a tunnel, or when the vehicle drives toward sections such as a bridge and a high embankment through which winds pass, or when the vehicle is traveling in a mountainous area. Therefore, the first processing apparatus may further obtain sensing data from another sensor, for example, a camera or a radar, and further recognize, based on the sensing data, a type of the environment in which the vehicle is located. When the vehicle is in the foregoing several environments, a function of sensing wind field information by the vehicle is enabled.

In an example, effect of a crosswind is intensified as a vehicle speed is increased. Therefore, the first processing apparatus may further obtain sensing data collected by a speed sensor, an acceleration sensor, or the like, and determine speed information of the vehicle based on the sensing data collected by the speed sensor, the acceleration sensor, or the like. Further, a traveling status of the vehicle is controlled by combining the speed information of the vehicle and the wind field information.

In an example, a lighter weight of the vehicle indicates a smaller friction force between the vehicle and a road surface and greater impact of a crosswind on the vehicle. Therefore, the first processing apparatus may further obtain sensing data collected by a pressure sensor, a gravity sensor, or the like, and determine weight information of the vehicle based on the data. Further, a traveling status of the vehicle is controlled by combining the weight information of the vehicle and the wind field information.

Based on the foregoing descriptions, it can be learned that the first processing apparatus obtains the sensing data from the at least one first sensor, and determines, based on the sensing data, the wind field information of the environment of the device on which the at least one first sensor is located, so that the vehicle can perceive strong wind weather, to satisfy, without affecting appearance and safety of the vehicle, a requirement for information required by the vehicle for planning and controlling traveling of the vehicle in a strong wind day, and improve safety performance of the vehicle.

In a possible implementation, the first processing apparatus may be the fusion unit shown in FIG. 2. For example, microphones at different installation positions on the vehicle collect original sound signals in respective orientations of the microphones and then perform signal processing to obtain wind noise information, and transmit the information, in an information form, for example, an object level or a feature level or/ a detection level, to the fusion unit through the interface A between the sensors and the fusion unit. The fusion unit synthesizes the wind noise information collected by the sensors in different orientations to obtain crosswind information (an intensity and a direction). Specifically, both the object level and the feature level correspond to a vehicle coordinate system. The object level does not distinguish categories of sensors that detect objects, and the feature level distinguishes categories of sensors that detect objects and corresponds to a detection result of a sensor group of a same type. The detection level corresponds to a sensor coordinate system and corresponds to a detection result of a single sensor. For definitions of different levels of information, refer to definitions in the existing International Organization for Standardization (International Organization for Standardization, ISO) 23150.

Examples of a form of the wind noise information transmitted in the interface A are as follows.

For example, in sound event information (Sound event information) in a logical signal group (Logical Signal Group, LSG) in an object level, feature level, and/or detection level (object level/feature level/detection level) interface of the microphone, a type of category information corresponding to the information, namely, a sound event classification type (Sound event classification type), is added, and wind noise information "SEType_Windnoise" is added.

### Enumeration (Enumeration): Sound event classification type - Example enumerators (Sound event classification type - Example enumerators):

| Name (Name) | Description (Description) | Requirement level (Requirement Level), RL enumerator (RL enumerator) |
|---|---|---|
| ... | ... | ... |
| SEType_Windnoise | The classification type represents wind noise (The classification type represents wind noise) | "exemplary (exemplary)" |

For another example, in an LSG in an object level, feature level, and/or detection level (object level/feature level/detection level) interface of the microphone, an LSG is added, and is referred to as "wind noise information (Wind noise information)", including a wind noise intensity (Wind noise intensity) and a wind noise direction (Wind noise direction).

| LSG | RL LSG | Signal (Signal) | RL signal | Option (Option) |
|---|---|---|---|---|
| | Mandatory (Mandatory, M)/Conditional (Conditional, C)/Optional (Optional, O) | | M/C/O | |
| ... | ... | ... | ... | ... |
| Wind noise information (Wind noise information) | M | Wind noise intensity (Wind noise intensity) | M | |
| | | Wind noise direction (Wind noise direction) | M | |

### Wind noise intensity (Wind noise intensity):

| Name (Name) | Wind noise intensity (Wind noise intensity) | | |
|---|---|---|---|
| Description (Description) | The signal "Wind noise intensity" provides an intensity of recognized wind noise (The signal "Wind noise intensity" provides the intensity of the recognized wind noise) | | |
| Value type (Value type) | Real number | Unit (Unit) | Decibel (dB) |

### Wind noise direction (Wind noise direction):

| Name (Name) | Wind noise direction (Wind noise direction) | | |
|---|---|---|---|
| Description (Description) | The signal "Wind noise direction" provides a direction of recognized wind noise (The signal "Wind noise direction" provides the direction of the recognized wind noise) | | |
| Value type (Value type) | Real number/(real number, real number) | Unit (Unit) | Degree/(degree, degree) |

In another possible implementation, the first processing apparatus may be a domain controller of the at least one first sensor.

"Domain" means that an automobile electronic system is divided into several functional blocks according to functions, and each functional block corresponds to a "domain". A system architecture within each functional block is established with a domain controller as a dominant one. A specific implementation of the domain controller may be a chip such as a multi-core central processing unit (Central Processing Unit, CPU) or a graphics processing unit (Graphics Processing Unit, GPU). This is not limited in this application. A controller area network (Controller Area Network, CAN) communication bus and a FlexRay communication bus may be used for interconnection between systems within domains. FlexRay is an automobile internal network communication protocol, and is fully referred to as FlexRay Consortium. For communication between different domains, Ethernet with higher transmission performance may be used as a backbone network to undertake an information exchange task. For communication between devices in a vehicle, in addition to a wired communication technology, a wireless communication technology such as Bluetooth or Wi-Fi may be used. Selection of a communication (wired or wireless) technology between devices in a vehicle is not limited in this application. For specific division into functional domains, different vehicle manufacturers may have different designs, for example, division into a power domain, a chassis domain, a cockpit domain, an automated driving domain, and a vehicle body domain, division into an automated driving domain, a smart cockpit domain, and a vehicle body control domain, division into an automated driving domain, a smart cockpit domain, a vehicle control domain, or the like. This is not limited in this application.

Correspondingly, in this embodiment of this application, the domain controller of the at least one first sensor is a domain controller in a functional block in which the at least one first sensor is located. For example, the first sensor is a microphone, the microphone belongs to a cockpit domain, and the domain controller is a domain controller of the cockpit domain. Certainly, this is merely an example. In an actual application, the microphone may alternatively belong to another domain.

It may be understood that the domain controller and a fusion unit may be integrated into one processing chip, or may be separately integrated into different processing chips. This is not limited in this application.

After obtaining the wind field information based on the sensing data, the domain controller may transmit the information, in a form of object level, feature level, and/or detection level (object level/feature level/detection level), to the fusion unit through an interface (for example, the interface A shown in FIG. 2) from the sensor to the fusion unit. An example in which the transmitted wind field information is crosswind information is used herein. Specific interface information forms are as follows.

For example, in sound event information (Sound event information) in an LSG in an object level, feature level, and/or detection level (object level/feature level/detection level) interface of the microphone, a type of category information corresponding to the information, namely, a sound event classification type (Sound event classification type), is added, and crosswind information "SEType_Crosswind" is added.

### Enumeration (Enumeration): Sound event classification type - Example enumerators (Sound event classification type - Example enumerators):

| Name (Name) | Description (Description) | RL enumerator (RL enumerator) |
|---|---|---|
| ... | ... | ... |
| SEType_Crosswind | The classification type represents a crosswind (The classification type represents crosswind) | "exemplary (exemplary)" |

For another example, in an LSG in an object level, feature level, and/or detection level (object level/feature level/detection level) interface of the microphone, an LSG is added, and is referred to as "crosswind information (Crosswind information)", including a crosswind level (Crosswind level), a crosswind speed (Crosswind speed), and a crosswind direction (Crosswind direction).

| LSG | RL LSG | Signal (Signal) | RL signal | Option (Option) |
|---|---|---|---|---|
| | M/C/O | | M/C/O | |
| ... | ... | ... | ... | ... |
| Crosswind information (Crosswind information) | M | Crosswind level (Crosswind level) | M | |
| | | Crosswind speed (Crosswind speed) | M | |
| | | Crosswind direction (Crosswind direction) | M | |

### Crosswind level (Crosswind level):

| Name (Name) | Crosswind level (Crosswind level) | | |
|---|---|---|---|
| Description (Description) | The signal "Crosswind level" provides a level of a recognized crosswind (The signal "Crosswind level" provides the level of the recognized crosswind) | | |
| Value type (Value type) | [0, 1, 2, ...] integer value | Unit (Unit) | 1 |

### Crosswind speed (Crosswind speed):

| Name (Name) | Crosswind speed (Crosswind speed) | | |
|---|---|---|---|
| Description (Description) | The signal "Crosswind speed" provides a speed of a recognized crosswind (The signal "Crosswind speed" provides the speed of the recognized crosswind) | | |
| Value type (Value type) | Real number | Unit (Unit) | m/s |

### Crosswind direction (Crosswind direction):

| Name (Name) | Crosswind direction (Crosswind direction) | | |
|---|---|---|---|
| Description (Description) | The signal "Crosswind direction" provides a direction of a recognized crosswind (The signal "Crosswind direction" provides the direction of the recognized crosswind) | | |
| Value type (Value type) | Real number/(real number, real number) | Unit (Unit) | Degree/(degree, degree) |

In this embodiment of this application, after obtaining the wind field information (for example, the crosswind information), the first processing apparatus may further provide the wind field information to another module in a driving system for use.

In a possible design, the first processing apparatus may send the wind field information to a second processing apparatus, to adjust a dynamics model parameter of the vehicle, so that the vehicle travels more smoothly. An example in which the first processing apparatus is a fusion unit is used. The fusion unit may send the wind field information to a planning and control module in an automated driving system. The planning and control module is a type of AD function module, and is mainly used for vehicle track planning and control. After obtaining the wind field information, the planning and control module may adjust a vehicle dynamics parameter such as a speed or an acceleration based on the wind field information, to control a vehicle track. It may be understood that the first processing apparatus and the second processing apparatus may be integrated into one processing chip, or may be separately integrated into different processing chips. This is not limited in this application. In this way, traveling safety of the vehicle can be improved.

In a possible design, the first processing apparatus may send the wind field information to at least one second sensor, where the wind field information is for adjusting a detection parameter of the at least one second sensor. An example in which the first processing apparatus is a fusion unit is used. An ultrasonic sensor is installed on the vehicle for distance measurement. Because ultrasonic waves are mechanical waves, the waves are affected by motion of a propagation medium. To be specific, a propagation speed of ultrasonic waves in air is in a superposition relationship with a wind speed, and strong winds also affect performance of the ultrasonic sensor. In this case, the fusion unit may send the wind field information (for example, through the interface B shown in FIG. 2) to the ultrasonic sensor, to adjust a detection parameter of the ultrasonic sensor, for example, a distance compensation amount of the ultrasonic sensor. The distance compensation amount is used to compensate for a distance detection result of the ultrasonic sensor, to counteract impact caused by air flow. In this way, detection precision of the second sensor can be improved.

In a possible design, the first processing apparatus may send the wind field information to a third processing apparatus or a human-machine interaction apparatus to control the human-machine interaction apparatus to display or play the wind field information, or control the human-machine interaction apparatus to display or play information corresponding to or indicating the wind field information. An example in which the first processing apparatus is a fusion unit is used. The fusion unit sends the wind field information to a central control screen, or the fusion unit sends the wind field information to a cockpit domain controller (Cockpit Domain Controller, CDC), and then the CDC sends the wind field information to the central control screen. After obtaining the wind field information, the central control screen may display an air flow change in an environment in which the vehicle is currently located, for example, display a direction, an intensity, a speed, or the like of a crosswind on the screen, or broadcast the direction, the intensity, the speed, or the like of the crosswind by voice. It may be understood that the first processing apparatus and the third processing apparatus may be integrated into one processing chip, or may be separately integrated into different processing chips. This is not limited in this application. In this way, a user can learn the wind field information through the human-machine interaction apparatus, so that user experience is improved.

Examples in which the first processing apparatus is a fusion unit are used above. To be specific, the fusion unit sends the wind field information to another module. In a scenario in which the first processor apparatus is a domain controller, the domain controller may also send the wind field information to another module. For example, the domain controller first sends the wind field information to a fusion unit, and then the fusion unit sends the wind field information to another module. Alternatively, when sending the wind field information to the fusion unit, the domain controller further directly sends the wind field information to another module (for example, the second sensor or the human-machine interaction apparatus). This is not limited in this application.

During specific implementation, the wind field information sent by the first processing apparatus to different modules may be different. For example, the wind field information sent by the first processing apparatus to the second processing apparatus may be information such as wind speeds, wind directions, or wind intensities in all directions around the vehicle, and the wind field information sent to the ultrasonic sensor may be information such as a wind speed, a wind direction, or a wind intensity corresponding to an installation position of the ultrasonic sensor.

It should be understood that the foregoing implementations may be separately implemented, or may be implemented in combination with each other. This is not limited in this application.

In addition, it should be noted that an example in which the method is applied to a vehicle is used above. In an actual application, the foregoing method is also applicable to another type of terminal device.

The method provided in embodiments of this application is described above with reference to the accompanying drawings. Apparatuses provided in embodiments of this application are described below with reference to the accompanying drawings.

Based on a same technical concept, an embodiment of this application provides a processing apparatus 600. The processing apparatus 600 includes a module/unit/means configured to perform the method performed by the first processing apparatus in the foregoing method embodiment. The module/unit/means may be implemented by using software, or may be implemented by using hardware, or may be implemented by hardware by executing corresponding software.

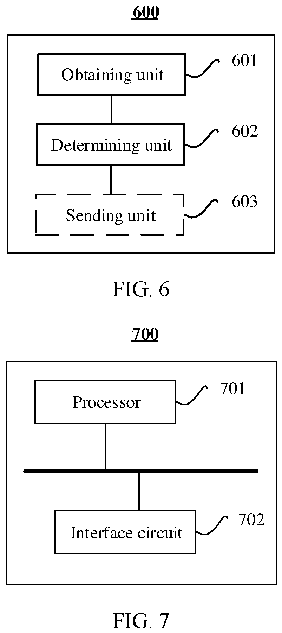

For example, with reference to FIG. 6, the processing apparatus 600 may include:
an obtaining unit 601, configured to obtain sensing data from at least one first sensor, where the sensing data includes data obtained based on a sound signal; and
a determining unit 602, configured to determine, based on the sensing data, information about an environment of a device on which the at least one first sensor is located, where the information about the environment includes wind field information.

In a possible design, the data obtained based on the sound signal may include a wind noise intensity and/or a wind noise direction. For a related definition of wind noise, refer to the foregoing descriptions. Details are not described herein again.

In a possible design, the wind field information includes one or more of the following: a wind speed, a wind direction, or a wind intensity. For a related definition of a wind field, refer to the foregoing descriptions. Details are not described herein again.

In a possible design, the wind field information includes one or more of the following: a wind speed, a wind direction, or a wind intensity in a preset direction, and the preset direction is perpendicular to a traveling direction of the device. For example, the preset direction is a direction perpendicular to a traveling direction of the device on which the first sensor is located. Certainly, this is merely an example. In an actual application, the preset direction may be extended to another direction.

In a possible design, the at least one first sensor includes at least two microphones distributed at different positions on the device, and the sound signal is obtained through the microphone. In other words, the sensing data may come from microphones at a plurality of different positions. Correspondingly, the determining unit 602 may determine the wind field information based on sensing data collected by microphones at different positions.

In a possible design, the processing apparatus 600 is a fusion unit, or a domain controller of the at least one first sensor, for example, a domain controller of a microphone. A domain to which the microphone belongs is, for example, a cockpit domain.

In a possible design, the processing apparatus 600 further includes a sending unit 603, configured to perform one or more of the following functions:
sending the wind field information to a second processing apparatus (for example, an AD function module configured to control a traveling track of a vehicle), where the wind field information is for adjusting a dynamics model parameter of the device;
sending the wind field information to at least one second sensor (for example, an ultrasonic sensor), where the wind field information is for adjusting a detection parameter (for example, a detection distance of the ultrasonic sensor) of the at least one second sensor; and
sending the wind field information to a third processing apparatus (for example, a CDC) or a human-machine interaction apparatus (for example, a central control screen) to control the human-machine interaction apparatus to display or play the wind field information.

In FIG. 6, a dashed box indicates that the sending unit 603 is optional for the processing apparatus 600.

It should be understood that all related content of the steps in the foregoing method embodiment may be cited in function descriptions of corresponding functional modules. Details are not described herein again.

Based on a same technical concept, with reference to FIG. 7, an embodiment of this application further provides a processing apparatus 700. The apparatus 700 includes at least one processor 701 and an interface circuit 702. The interface circuit 702 is configured to receive a signal from another apparatus different from the apparatus 700 and transmit the signal to the processor 701, or send a signal from the processor 701 to another apparatus different from the apparatus. The processor 701 is configured to implement, by using a logic circuit or executing code instructions, the method performed by the first processing apparatus in the foregoing method embodiment.

It should be understood that the processor mentioned in this embodiment of this application may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in this embodiment of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method performed by the first processing apparatus in the foregoing method embodiment is performed.

Based on a same technical concept, an embodiment of this application further provides a computer program product including instructions. The computer program product stores the instructions. When the instructions are run on a computer, the method performed by the first processing apparatus in the foregoing method embodiment is performed.

Based on a same technical concept, an embodiment of this application further provides a data transmission system, including: at least one first sensor, configured to obtain sensing data, where the sensing data includes data obtained based on a sound signal; and a first processing apparatus, configured to obtain the sensing data from the at least one first sensor, and determine, based on the sensing data, information about an environment of a device on which the at least one first sensor is located, where the information about the environment includes wind field information.

For a specific implementation of the system, refer to descriptions of related implementations in the foregoing method embodiment. Details are not described herein again.

Based on a same technical concept, an embodiment of this application further provides a terminal device, including the foregoing data transmission system. The terminal device may be a vehicle, a drone, a helicopter, an airplane, a ship, an intelligent transportation device, a smart home device, or the like. A specific form of the terminal device is not limited in embodiments of this application.

A person skilled in the art should understand that embodiments of this application may be provided as a method, a system, or a computer program product. Therefore, in this application, a form of hardware only embodiment, software only embodiment, or embodiment with a combination of software and hardware may be used. In addition, in this application, a form of computer program product that is implemented on one or more computer-usable storage media (including but not limited to a disk memory, a CD-ROM, an optical memory, and the like) that include computer-usable program code may be used.

This application is described with reference to the flowcharts and/or the block diagrams of the method, the device (system), and the computer program product according to this application. It should be understood that computer program instructions may be used to implement each process and/or block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of the claims of this application and their equivalent technologies.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between associated objects. In a formula in this application, the character "/" indicates a "division" relationship between associated objects. "Including at least one of A, B, or C" may indicate: including A; including B; including C; including A and B; including A and C; including B and C; and including A, B, and C.

## Claims

1. A data transmission method, wherein the method comprises:
obtaining, by a first processing apparatus, sensing data from at least one first sensor, wherein the sensing data comprises data obtained based on a sound signal; and
determining, by the first processing apparatus based on the sensing data, information about an environment of a device on which the at least one first sensor is located, wherein
the information about the environment comprises wind field information.

2. The method according to claim 1, wherein the data obtained based on the sound signal comprises a wind noise intensity and/or a wind noise direction.

3. The method according to claim 1 or 2, wherein the wind field information comprises one or more of the following: a wind speed, a wind direction, or a wind intensity.

4. The method according to claim 3, wherein the wind field information comprises one or more of the following: a wind speed, a wind direction, or a wind intensity in a preset direction, and the preset direction is perpendicular to a traveling direction of the device.

5. The method according to any one of claims 1 to 4, wherein the at least one first sensor comprises at least two microphones distributed at different positions on the device, and the sound signal is obtained through the microphone.

6. The method according to any one of claims 1 to 5, wherein the first processing apparatus is a fusion unit, or a domain controller of the at least one first sensor.

7. The method according to any one of claims 1 to 6, wherein the method further comprises:
sending, by the first processing apparatus, the wind field information to a second processing apparatus, wherein the wind field information is for adjusting a dynamics model parameter of the device.

8. The method according to any one of claims 1 to 7, wherein the method further comprises:
sending, by the first processing apparatus, the wind field information to at least one second sensor, wherein the wind field information is for adjusting a detection parameter of the at least one second sensor.

9. The method according to any one of claims 1 to 8, wherein the method further comprises:
sending, by the first processing apparatus, the wind field information to a third processing apparatus or a human-machine interaction apparatus to control the human-machine interaction apparatus to display or play the wind field information.

10. A processing apparatus, wherein the processing apparatus comprises:
an obtaining unit, configured to obtain sensing data from at least one first sensor, wherein the sensing data comprises data obtained based on a sound signal; and
a determining unit, configured to determine, based on the sensing data, information about an environment of a device on which the at least one first sensor is located, wherein
the information about the environment comprises wind field information.

11. The apparatus according to claim 10, wherein the data obtained based on the sound signal comprises a wind noise intensity and/or a wind noise direction.

12. The apparatus according to claim 10 or 11, wherein the wind field information comprises one or more of the following: a wind speed, a wind direction, or a wind intensity.

13. The apparatus according to claim 12, wherein the wind field information comprises one or more of the following: a wind speed, a wind direction, or a wind intensity in a preset direction, and the preset direction is perpendicular to a traveling direction of the device.

14. The apparatus according to any one of claims 10 to 13, wherein the at least one first sensor comprises at least two microphones distributed at different positions on the device, and the sound signal is obtained through the microphone.

15. The apparatus according to any one of claims 10 to 14, wherein the processing apparatus is a fusion unit, or a domain controller of the at least one first sensor.

16. The apparatus according to any one of claims 10 to 15, wherein the processing apparatus further comprises:
a sending unit, configured to send the wind field information to a second processing apparatus, wherein the wind field information is for adjusting a dynamics model parameter of the device.

17. The apparatus according to any one of claims 10 to 16, wherein the processing apparatus further comprises:
the sending unit, configured to send the wind field information to at least one second sensor, wherein the wind field information is for adjusting a detection parameter of the at least one second sensor.

18. The apparatus according to any one of claims 10 to 17, wherein the processing apparatus further comprises:
the sending unit, configured to send the wind field information to a third processing apparatus or a human-machine interaction apparatus to control the human-machine interaction apparatus to display or play the wind field information.

19. A data transmission system, comprising:
at least one first sensor, configured to obtain sensing data, wherein the sensing data comprises data obtained based on a sound signal; and
a first processing apparatus, configured to obtain the sensing data from the at least one first sensor, and determine, based on the sensing data, information about an environment of a device on which the at least one first sensor is located, wherein the information about the environment comprises wind field information.

20. The system according to claim 19, wherein the data obtained based on the sound signal comprises a wind noise intensity and/or a wind noise direction.

21. The system according to claim 19 or 20, wherein the wind field information comprises one or more of the following: a wind speed, a wind direction, or a wind intensity.

22. The system according to claim 21, wherein the wind field information comprises one or more of the following: a wind speed, a wind direction, or a wind intensity in a preset direction, and the preset direction is perpendicular to a traveling direction of the device.

23. The system according to any one of claims 19 to 22, wherein the at least one first sensor comprises at least two microphones distributed at different positions on the device, and the sound signal is obtained through the microphone.

24. The system according to any one of claims 19 to 23, wherein the processing apparatus is a fusion unit, or a domain controller of the at least one first sensor.

25. The system according to any one of claims 19 to 24, wherein the first processing apparatus is further configured to send the wind field information to a second processing apparatus, wherein the wind field information is for adjusting a dynamics model parameter of the device.

26. The system according to any one of claims 19 to 25, wherein the first processing apparatus is further configured to send the wind field information to at least one second sensor, wherein the wind field information is for adjusting a detection parameter of the at least one second sensor.

27. The system according to any one of claims 19 to 26, wherein the first processing apparatus is further configured to send the wind field information to a third processing apparatus or a human-machine interaction apparatus to control the human-machine interaction apparatus to display or play the wind field information.

28. A processing apparatus, comprising at least one processor and an interface circuit, wherein the interface circuit is configured to receive a signal from another apparatus different from the apparatus and transmit the signal to the processor, or send a signal from the processor to another apparatus different from the apparatus, and the processor is configured to implement the method according to any one of claims 1 to 9 by using a logic circuit or executing code instructions.

29. A terminal device, comprising the system according to any one of claims 19 to 27.

30. A computer-readable storage medium, wherein the readable storage medium is configured to store instructions, and when the instructions are executed, the method according to any one of claims 1 to 9 is implemented.

31. A computer program product, wherein the computer program product stores instructions, and when the instructions are run on a computer, the computer is enabled to perform the method according to any one of claims 1 to 9.
